# EUROPEAN PATENT APPLICATION

(11) **EP 2 757 450 A1**
(43) Date of publication of application: **23.07.2014**
(21) Application number: 12832112.2
(22) Date of filing: 10.09.2012
(51) Int. Cl.: G06F 3/048, G06F 17/21

(54) **DEVICE AND METHOD FOR PROCESSING WRITE-IN INFORMATION OF ELECTRONIC STICKY NOTE**

(30) Priority: 15.09.2011 JP 2011201579
(71) Applicant: NEC CASIO Mobile Communications, Ltd., Kawasaki-shi, Kanagawa 211-8666 (JP)
(72) Inventor: UNO Hiroyuki, Kawasaki-shi Kanagawa 211-8666 (JP)
(74) Representative: Vossius & Partner
(86) International application number: PCT/JP2012/073010
(87) International publication number: WO 2013/039023

(57) **Abstract**

An information processing device having a touch panel adopts an electronic tag application to display an electronic tag icon on the screen. Upon detecting a user's operation to select the electronic tag icon, a tag form is displayed on the screen. It is determined as to whether or not the tag form is moved and displayed to overlap with the predetermined area of the screen via a user's operation. Herein, it is possible to automatically extract write information from display information with which the tag form is displayed and overlapped. The write information is recorded and displayed in the tag form. Alternatively, it is possible to record tag form data, representing the tag form and the write information, in connection with a desired application. Additionally, it is possible to transmit tag form data to another information processing device.

## Description

### TECHNICAL FIELD

The present invention relates to an information processing device having a touch panel and, in particular, to a device and a method for processing write information of an electronic tag displayed on a touch panel.

The present application claims priority on Japanese Patent Application No. 2011-201579 filed September 15, 2011, the entire content of which is incorporated herein by reference.

### BACKGROUND ART

In companies and offices handling paperwork, it may be necessary to keep slips of paper called tags, which are used to keep simple memos or to write simple messages or information, together with papers. Tags are advantageous for office workers to prevent paperwork-related memos or messages from being lost. Recently, information processing devices, i.e. handheld information terminals such as cell phones and smart phones equipped with touch panels, have been put on the market and used by many people. To improve the user friendliness for information processing devices, information processing devices having functions to display electronic tags have been developed.

As documents related to information processing devices having functions of electronic tags, for example, Patent Literature Document 1 discloses an electronic tag system in which part of existing sentences can be moved to an electronic tag while the content of an electronic tag can be inserted into existing sentences. Patent Literature Document 2 discloses a multimedia tag device in which multimedia contents can be attached to electronic tags while electronic tags can be detached from the display screen.

### CITATION LIST

### PATENT LITERATURE DOCUMENT

Patent Literature Document 1: Japanese Patent Application Publication No. 2004-46358
Patent Literature Document 2: Japanese Patent Application Publication No. 2011-95902

### SUMMARY OF INVENTION TECHNICAL PROBLEM

However, the foregoing conventional arts cannot be incorporated into handheld information terminals such that users can intuitively operate electronic tags; hence, it is necessary to develop technologies which can improve the user friendliness for electronic tags.

It is an object of the present invention to provide a device and a method which can process write information by use of electronic tags displayed in an information processing device having touch panels.

### SOLUTION TO PROBLEM

The present invention relates to an information processing device having a touch panel. The information processing device includes an icon display which displays an electronic tag icon of an electronic tag application on the screen; an icon selection detection part which detects a user's operation to select the electronic tag icon; a tag display which displays a tag form on the screen upon detecting the user's operation to select the electronic tag icon; a display state determination part which determines as to whether or not the tag form is displayed to overlap with display information, which is displayed in a predetermined area on the screen, via a user's operation; and a tag write part which writes and displays write information, which is extracted from the display information, in the tag form when the display state determination part determines that the tag form is displayed to overlap with the display information.

The present invention relates to a method for processing write information of an electronic tag adapted to an information processing device having a touch panel. The method of processing write information of an electronic tag includes the steps of: displaying an electronic tag icon of an electronic tag application on the screen; detecting a user's operation to select the electronic tag icon; displaying a tag form on the screen; determining as to whether or not the tag form is displayed to overlap with display information, which is displayed in a predetermined area of the screen, via a user's operation; extracting the write information from the display information with which the tag form is displayed to overlap; and writing and displaying the write information in the tag form.

The present invention relates to a program which applies an electronic tag to an information processing device having a touch panel so as to execute processing of write information in the electronic tag. The program includes the steps of: displaying an electronic tag icon of an electronic tag application on the screen; detecting a user's operation to select the electronic tag icon; displaying a tag form on the screen; determining as to whether or not the tag form is displayed to overlap with display information, which is displayed in a predetermined area of the screen, via a user's operation; extracting write information from the display information with which the tag form is displayed to overlap; and writing and displaying the write information in the tag form.

### ADVANTAGEOUS EFFECTS OF INVENTION

According to the present invention, each user may operate an information processing device (e.g. a cell phone, a smart phone, a tablet PC) by intuition so as to write desired information in a tag form displayed on a touch panel. Additionally, it is possible to store tag form data in connection with other applications and to transmit tag form data to other information processing devices. Thus, it is possible to improve the user friendliness for electronic tags.

### BRIEF DESCRIPTION OF DRAWINGS

Fig. 1 is an outline drawing of an information processing device having a touch panel according to one embodiment of the present invention.
Fig. 2 is a functional block diagram of the information processing device.
Fig. 3 is a flowchart showing an electronic tag process of the information processing device.
Fig. 4 is an enlarged front view showing a touch operation of an electronic tag on a touch panel with a user's finger.
Fig. 5 is an enlarged front view showing a touch operation and a move operation on a touch panel with a user's finger.
Fig. 6 is an enlarged front view showing an example of a touch panel display in which a desired character string is written into a tag form by way of a user's operation on a keyboard.
Fig. 7 is an enlarged front view showing an example of an operation to record a desired webpage URL in a tag form on a touch panel.
Fig. 8 is an enlarged front view showing an example of an operation to correlate write information of an electronic tag on a touch panel with a home screen.
Fig. 9 is an enlarged front view showing an example of an operation to automatically write a character string which is highlighted and displayed in a tag form on a touch panel.
Fig. 10 is an enlarged front view showing a process to receive and transmit write information recorded in a tag form between two information processing devices.

### DESCRIPTION OF EMBODIMENT

The present invention will be described in detail by way of examples with reference to the accompanying drawings.

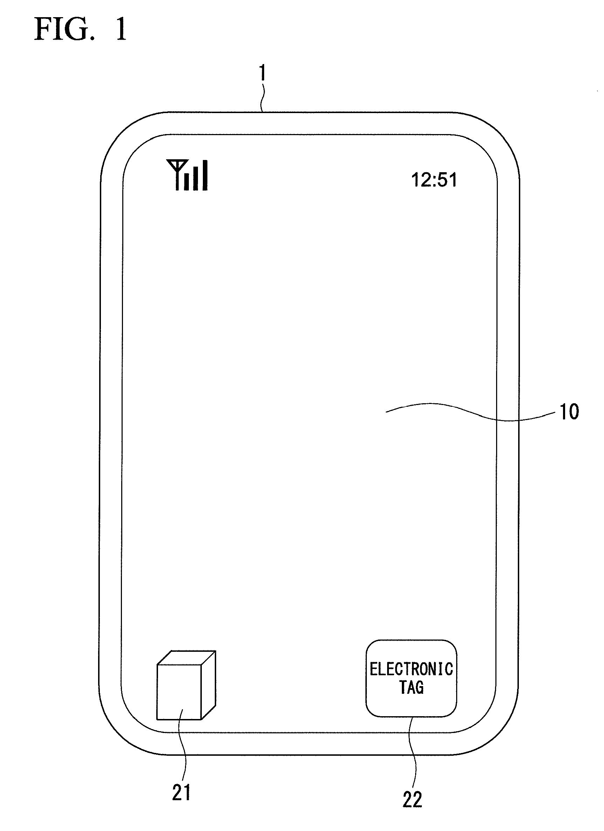

Fig. 1 is an outline drawing of an information processing device 1 according to one embodiment of the present invention. The information processing device 1 is a handheld information terminal, such as a cell phone and a smart phone, which is equipped with a touch panel 10 laminating a touch sensor in a display. Various icons, time, and antenna sensitivity are displayed on the touch panel 10. When a user's finger touches the touch panel 10, the information processing device 1 determines a user's operation based on a touch position on the touch panel 10 and a move operation at the touch position. In Fig. 1, a trash box 21 (i.e. an icon representing a folder used to delete files) and an electronic tag 22 (i.e. an icon representing an electronic tag application) are displayed on the touch panel 10.

The trash box 21 is displayed on the touch panel 10 according to a delete application. Due to a user's operation in which an icon (e.g. a command, a file, a folder, etc.), which is displayed on the touch panel 10, is dragged with a user's finger and overlapped with the trash box 21, the data related to the icon is moved to a delete folder. Thus, a user may delete desired data from the touch panel 10 and move it to the trash box 21.

A user carries out an electronic tag application by operating the electronic tag 22. Specifically, when a user carries out a slide operation while touching the electronic tag 22 with a user's finger, the information processing deice 1 detects a user's operation applied to the electronic tag 22 so as to activate an electronic tag application, thus moving a tag form displayed on the touch panel 10 in response to the user's operation.

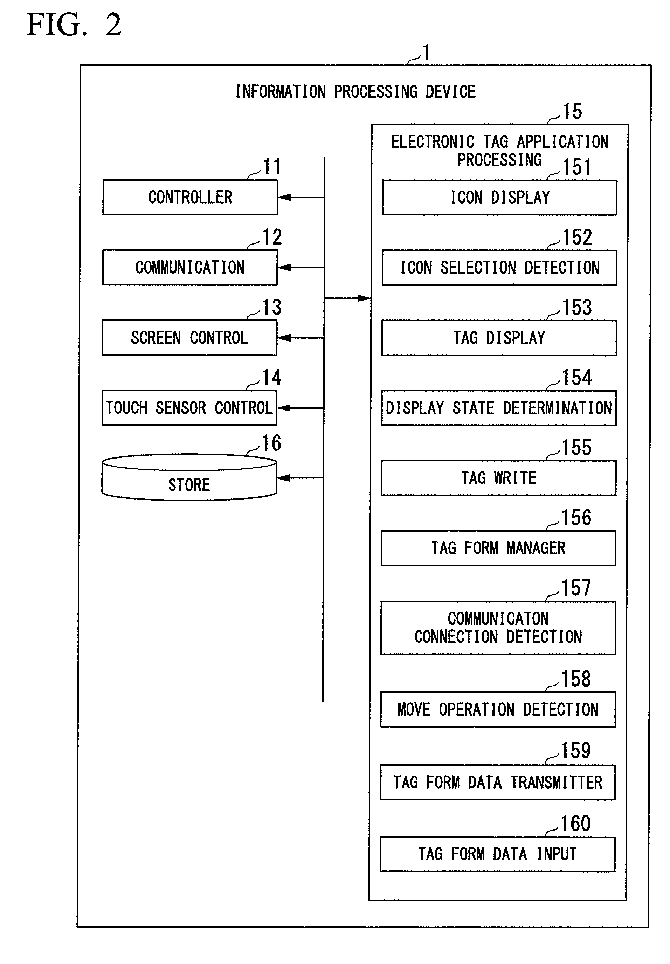

Fig. 2 is a functional block diagram of the information processing device 1. The information processing device 1 includes a controller 11, a communication part 12, a screen control part 13, a touch sensor control part 14, and a store part 16. The present invention is characterized by installing an electronic tag application processing part 15 in the information processing device 1.

The controller 11 controls the overall operation of the information processing device 1. The communication part 12 communicates with another information processing device (not shown) to receive and transmit information. The screen control part 13 renders information and images displayed on the touch panel 10. The touch sensor control part 14 detects a touch position of a user's finger in the touch sensor laminated in the touch panel 10. Additionally, the store part 16 is configured of a semiconductor memory or a hard-disk drive.

The electronic tag application processing part 15 includes an icon display 151, an icon selection detection part 152, a tag display 153, a display state determination part 154, a tag write part 155, a tag form manager 156, a communication connection detection part 157, a move operation detection part 158, a tag form data transmitter 159, and a tag form data input part 160. The information processing device 1 implements the above functions when starting an electronic tag application.

The icon display 151 displays the electronic tag 22, i.e. an icon representing an electronic tag application, on the touch panel 10. The icon selection detection part 152 detects that a user selects and operates the electronic icon 22. When a user selects the electronic tag 22, the tag display 153 displays a tag form on the touch panel 10. The display state determination part 154 determines whether or not a user moves a tag form with a user's finger so as to overlap it with a desired information area (i.e. an area used to display images or files) which was already displayed on the touch panel 10. When the display state discrimination part 154 determines that a tag form is displayed to overlap with the information area on the touch panel 10, the tag write part 155 correlates the write information, corresponding to the information area, with the tag form so as to display the write information in the tag form.

The tag form manager 156 manages a process to transfer the write information of the tag form to another application. That is, the write information of the tag form is displayed inside a picture of another application when the tag form is displayed to overlap with an icon or a window representing another application displayed on the touch panel 10. The communication connection detection part 157 detects a condition to communicate with another information processing device. The move operation detection part 158 detects that a user moves a tag form, displayed on the touch panel 10, with a user's finger. As a move operation of a tag form with a user's finger, for example, it is possible to detect a slide operation or a flick operation in which a user moves a tag form with a user's finger at the predetermined speed on the touch panel 10. Upon detecting a user's move operation applied to a tag form, the tag form data transmitter 159 transfers the write information of the tag form to another information processing device. When the information processing device 1 receives the tag form data from another information processing device, the tag form data input part 160 displays the tag form data on the touch panel 10.

The present embodiment provides the information processing device 1 having a user-friendly electronic tag processing function via the foregoing function.

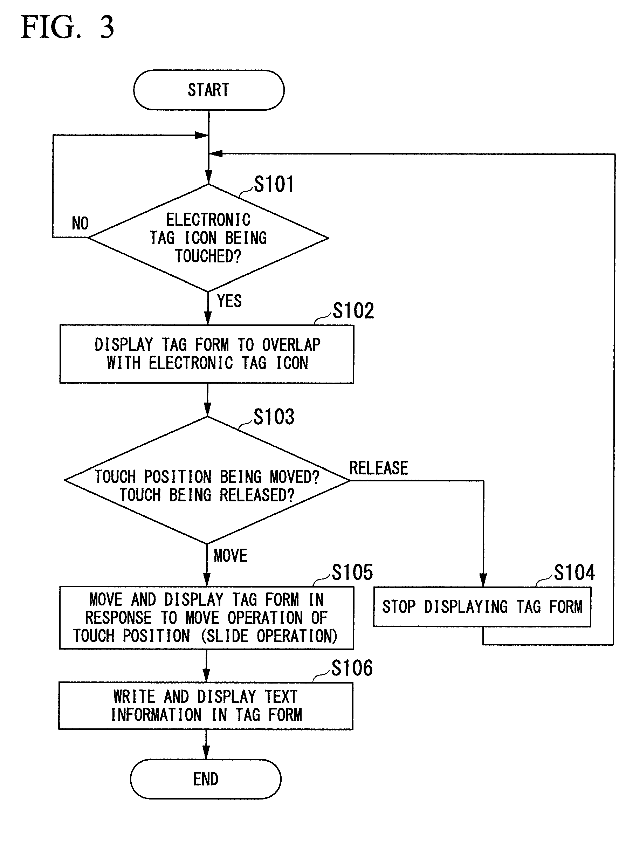

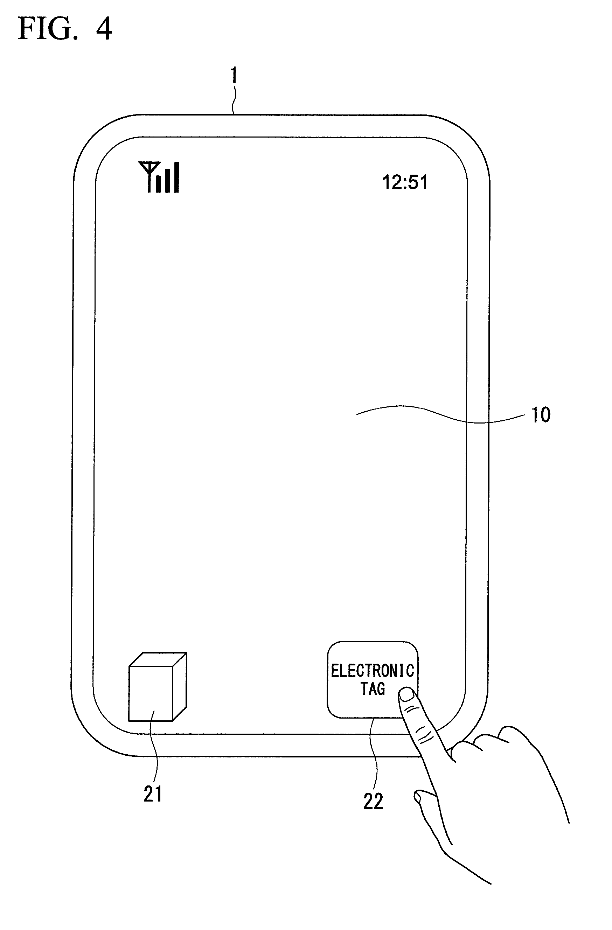

Next, the processing content of the information processing device 1 will be described in detail with reference to Figs. 3 to 6. Fig. 3 is a flowchart showing an electronic tag process of the information processing device 1. Figs. 4 to 6 show examples of displays and operations with respect to the touch panel 10 of the information processing device 1.

First, the icon display 151 of the information processing device 1 displays the electronic tag 22 on the touch panel 10. The icon selection detection part 152 determines whether or not a user's finger touches the electronic tag 22 on the touch panel 10 (step S101). The display position of the electronic tag 22 on the touch panel 22 is stored in a semiconductor memory (or a store means such as a hard disk). Upon inputting a touch position on the touch panel 10 with a user's finger or a stylus pen from the touch sensor control part 14, the icon selection detection part 152 determines whether or not the touch position matches the display position of the electronic tag 22. When the display position of the electronic pad 22 is defined as a range of coordinates, it is determined whether or not the touch position matches the range of coordinates. In this connection, the range of coordinates of the electronic tag 22 may be larger or smaller than the range of displaying an icon of the electronic tag 22. Fig. 4 shows a touch operation applied to the electronic tag 22 on the touch panel 10 with a user's finger. Herein, the icon selection detection part 152 determines that the touch position with a user's finger falls within the range of the display position of the electronic tag 22 on the touch panel 10, thus determining that a user selects the electronic tag 22.

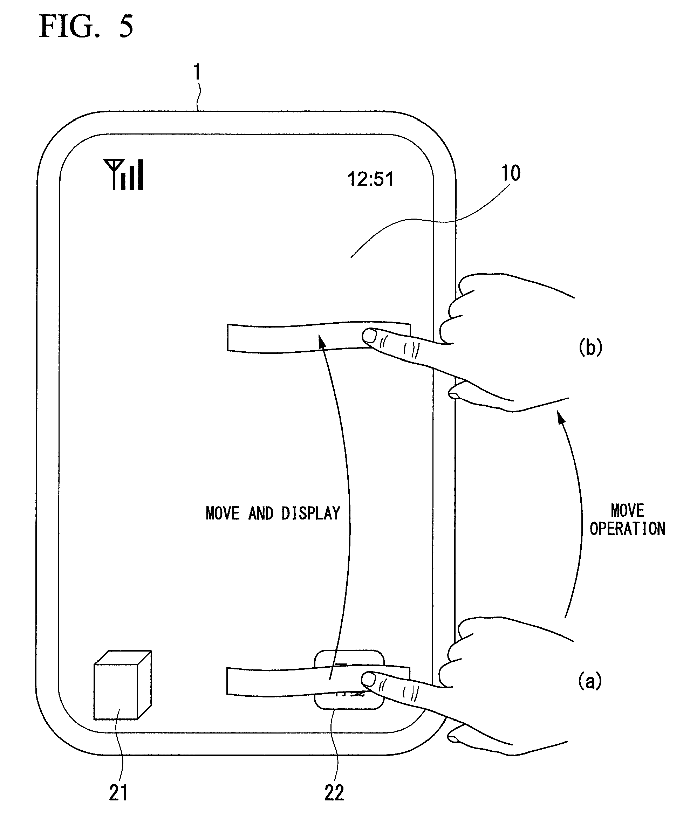

Fig. 5 shows a touch operation and a move operation applied to the electronic tag 22 with a user's finger on the touch panel 10. When it is determined that the touch position with a user's finger falls within the range of the display position of the electronic tag 22 on the touch panel 10, the icon selection detection part 152 instructs the tag display 153 to generate and display a tag form (i.e. a rectangular-shaped image shown in Fig. 5(a)) on the touch panel 10. Thus, a tag form is displayed to overlap with the icon of the electronic tag 22 (step S102). After displaying a tag form, the tag display 153 determines, based on the touch position information input thereto from the touch sensor control part 14, whether the a touch operation with a user's finger onto the electronic tag 22 is released or whether the touch position is moved while maintaining the touch operation (step S103). When a touch operation with a user's finger is released, the tag display 153 stops displaying the tag form on the touch panel 10 (step S104). When a move operation is carried out while maintaining the touch operation with a user's finger (i.e. when a slide operation with a user's finger is carried out), the tag display 153 moves the tag form in a moving direction of a user's finger (step S105). That is, the move operation is carried out such that the tag form is moved from the position shown in Fig. 5(a) to the position shown in Fig. 5(b). The tag display 153 displays and moves the tag form until the touch operation with a user's finger is released, and then displays the tag form which is stopped at the touch position at the release timing of the touch operation.

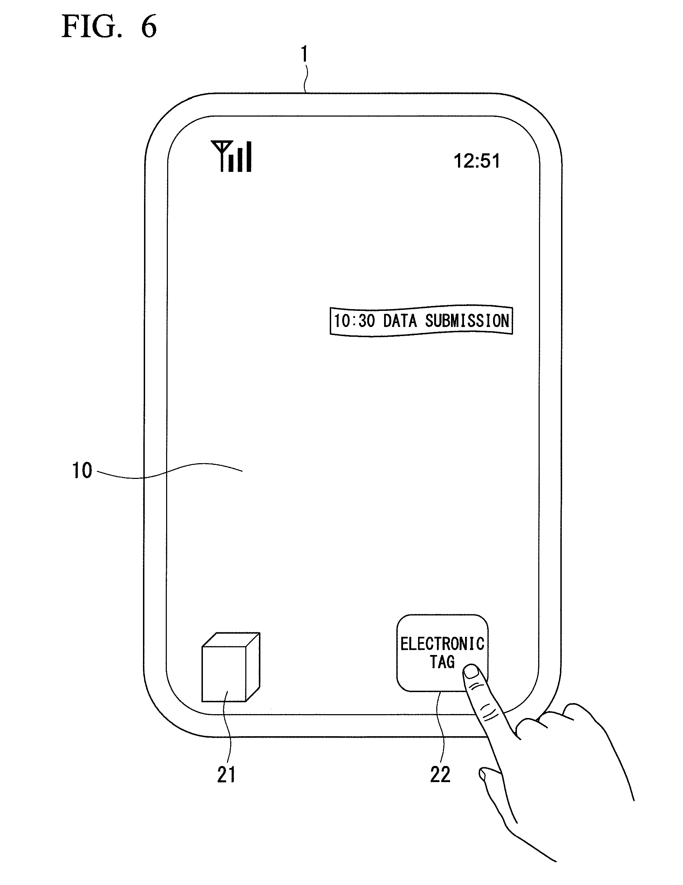

After detecting the release of the touch operation with a user's finger, when the display state determination part 154 determines that the tag form is not displayed to overlap with the information area on the touch panel 10, the tag display 153 instructs the tag write part 155 to start a write operation in the tag form. That is, the tag write part 155 instructs the controller 11 to start a keyboard function. Subsequently, the controller 11 starts a keyboard function in which the screen control part 13 displays an image of a keyboard on the touch panel 10. The touch sensor control part 14 detects the touch position with a user's finger, wherein the controller 11 detects a string of characters which are specified by touch operations with user's fingers on the keys in the keyboard displayed on the touch panel 10, thus outputting a string of characters to the electronic tag application processing part 15. The tag write part 155 sequentially writes and displays a string of characters in the tag form (step S106). Thus, it is possible to display a string of characters, which a user inputs by use of the keyboard displayed on the touch panel 10, in the tag form. Fig. 6 shows an example of a displayed image on the touch panel 10 which inputs a string of characters "10:30 DATA SUBMISSION". Thus, the information processing device 1 carries out a tag function in response to a touch operation and a slide operation of an electronic tag on the touch panel 10 as well as a character inputting operation with user's fingers.

It is possible for the tag display 153 to display a tag form selection list which allows each user to select items such as the size, color, shape, and type of tag forms (e.g. graphic patterns) when a user's finger or a stylus pen touches an electronic tag on the touch panel 10. In this case, when a user selects a desired tag form from among the tag form selection list, the tag display 153 displays the tag form on the touch panel 10. Specifically, upon detecting that a touch operation with a user's finger touching the electronic tag 22 on the touch panel 10 is maintained for the predetermined time, the tag display 153 displays the tag form selection list while overlapping it with the electronic tag 22. When a user selects a desired tag form (i.e. a tag form candidate having a desired size, color, shape, and type) from among the tag form selection list, the tag display 153 displays the tag form while highlighting it (or enlarging it). Then, a slide operation is carried out on the selected tag form while the touch position is moved by a user's finger. When the move operation detection part 158 detects that the tag form is moving on the tough panel 10, the tag display 153 determines that the tag form is subjected to a move operation (i.e. a slide operation), thus displaying the tag form while moving it in a moving direction of the touch position with a user's finger.

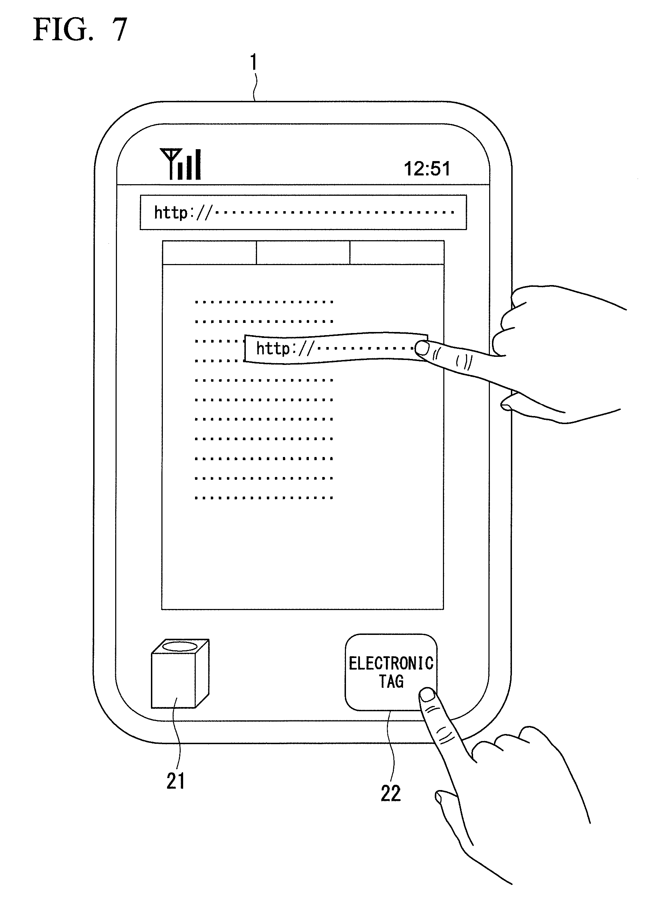

Next, an example of an operation of the information processing device 1 shown in Fig. 7 will be described. In an example of an operation of Fig. 7, similar to the foregoing examples of operations in Figs. 4 to 6, a tag form is displayed on the touch panel 10 upon detecting a select operation on the electronic tag 22 with a user's finger. The tag form is subjected to a slide operation with a user's finger, and then the tag form is moved to a desired position. The tag display 153 detects a user's finger releasing a touch condition on the touch panel 10. Thus, the tag display 153 outputs the touch release information to the display state determination part 154.

The display state determination part 154 determines whether or not the tag form is displayed to overlap with the information area, which was already displayed on the touch panel 10, in accordance with a user's operation. For example, when a web browser is displayed in the information area, the display state determination part 154 detects that the tag form is displayed to overlap with the web browser. Specifically, the display area of the web browser is compared with the display position of the tag form. The display state determination part 154 determines whether or not coordinates of the display position of the tag form exist within a range of coordinates of the display area of the web browser. Upon detecting that the display position of the tag form exists in a range of the display area of the web browser, the display state determination part 154 notifies the tag write part 155 of an identification of the display information (e.g. an identification or ID of the web browser).

Upon receiving the identification, the tag write part 155 detects the predetermined information from the display area. In the case of Fig. 7, the tag write part 155 reads the URL of a web page via the web browser, which is currently displayed on the touch panel 10, from the store part 16. In this case, it is possible to inquire into a web browser function part so as to receive its response, thus retrieving the URL of a web page. The tag write part 155 displays a character string of the read or retrieved URL in the tag form. According to this process, it is possible to automatically record the URL of a web page in the tag form. By saving the tag form, it is possible for a user to easily read the URL of a web page, which is currently displayed on the touch panel 10.

An example of an operation in which a tag form is displayed to overlap with a web page and in which the URL of a web page is read and displayed in the tag form is described with reference to Fig. 7; but this is not a restriction. For example, it is possible to automatically read and display an URL in a tag form only when the tag form is overlapped with an area used to display the URL of a web page (i.e. an area used to display a character string of the URL). In this case, the display state determination part 154 determines whether or not the display position of the tag form matches the predetermined area within the display area of the web browser (i.e. an area used to displays a character string of an URL). When the display position of the tag form matches the predetermined area within the display area of the web browser, the display state determination part 154 notifies the tag write part 155 of an identification of the display information (e.g. an identification or ID of the web browser). Upon receiving the identification, the tag write part 155 reads the URL of the display information (i.e. a web page) from the store part 16 or retrieves it via a web browser function part, thus displaying a character string of the URL in the tag form.

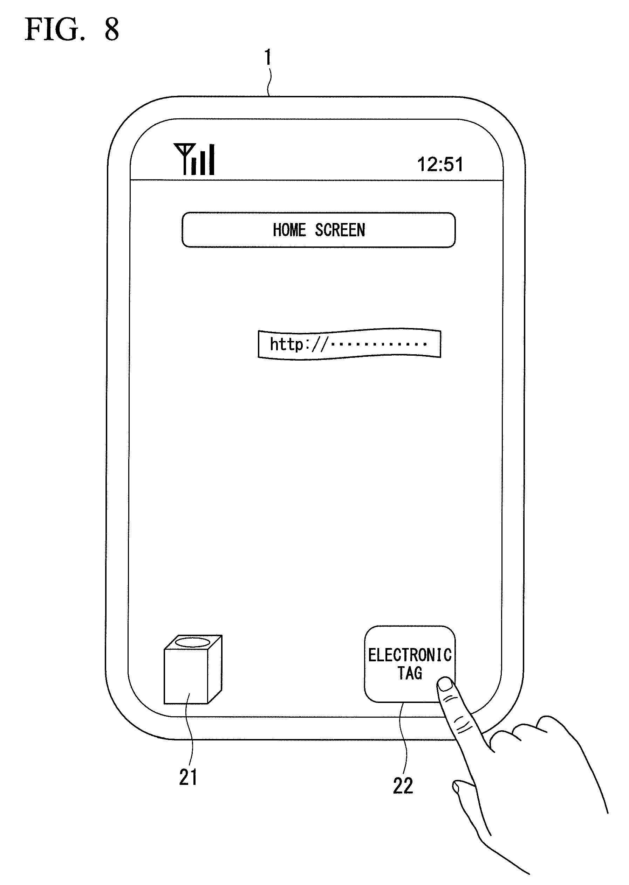

Next, an example of an operation of the information processing device 1 shown in Fig. 8 will be described. In this example of an operation, it is possible to automatically save a tag form. As shown in Fig. 7, a tag form has been displayed to overlap with the display area of the web browser in advance. The tag display 153 automatically erases the tag form on the touch panel 10 in a lapse of the predetermined time. Alternatively, the tag display 153 may instruct the tag form manager 156 to display the erased tag form in another screen. That is, the automatically erased tag form will be displayed again when the tag form manager 156 controls the touch panel 10 to switch the displayed screen. In the case of Fig. 8, the tag form manager 156 controls the tag form to be displayed on the home screen. Specifically, the tag form manager 156 stores a tag form written with a character string of the URL of a web page in connection with the home screen in a home screen display information data table of the store part 16. Thus, when the screen control part 13 displays the home screen on the touch panel 10, the tag form manager 156 reads the information of a tag form, which is displayed in the home screen, from the home screen display information data table, thus displaying the tag form on the touch panel 10. In this connection, the screen used to save tag forms is not necessarily limited to the home screen. For example, it is possible to save tag forms in a diary recording screen, a schedule screen, or other screens.

As described above, it is possible to automatically move and save tag forms in a desired screen such as the home screen in accordance with a move operation which is applied to tag forms displayed via the web browser with a user's finger. Thus, when a user intends to continuously use the web browser after processing tag forms, it is possible to prevent tag forms from being continuously displayed via the web browser, which is thus hard to be viewed, thus hindering user's operations. Owing to the setting in which tag forms should be automatically saved and displayed in the home screen, it is possible to display tag forms in the home screen which is displayed on the touch panel 10 when a user starts the information processing device 1, and therefore it is possible for each user to easily read memos or information written into tag forms. When the information processing device 1 allows each user to arbitrarily set a screen which is used to save and display tag forms, it is possible for each user to arbitrarily display a desired screen on the touch panel 10 and to read write information of tag forms. Thus, it is possible to improve the user friendliness for the electronic tag 22, and it is possible to achieve user's management of write information of tag forms.

In this connection, the information written into each tag form is not necessarily limited to a character string of URL. It is possible to determine the write information of each tag form in response to the display information when each tag form is displayed to overlap with the display information which is displayed on the touch panel 10. Additionally, it is possible to employ various pieces of information as the write information of each tag form. For example, it is possible to write names (e.g. family names, individual names, real names, nicknames), organizations (e.g. titles, genres of organizations), places (e.g. addresses, residences, departures/destinations), telephone numbers (e.g. telephone voice data, FAX numbers), email addresses, dates (e.g. birthdates, deadlines, departure times), still picture data, moving picture data, audio data, application data (e.g. players, viewers, browsers, mailers, dialers, editing tools, programs, addresses to request application processing, etc.) in tag forms.

It is possible to collectively display a plurality of write information in each tag form. Decisions as to which write information should be retrieved from display information in response to the type of display information which is overlapped with each tag form can be stored in connection with identifications of display information in the home screen display information data table stored in the store part 16. To facilitate readability of write information of each tag form, it is possible to store the store area of write information in connection with the identification of display information in the home screen display information data table. Additionally, when a tag form is displayed to overlap with the display information representing a calendar, the tag write part 155 may retrieve memos, regarding the predetermined date or the predetermined period of time which is recorded via a calendar function, from a calendar function part so as to collectively write a plurality of memos in the tag form or to classify and individually write memos in the tag form in connection with dates. When a plurality of tag forms is displayed on the touch panel 10, it is possible to determine the order of tag forms in accordance with a first character or number in a string of characters which are written into each tag form, thus sorting and displaying a plurality of tag forms in order.

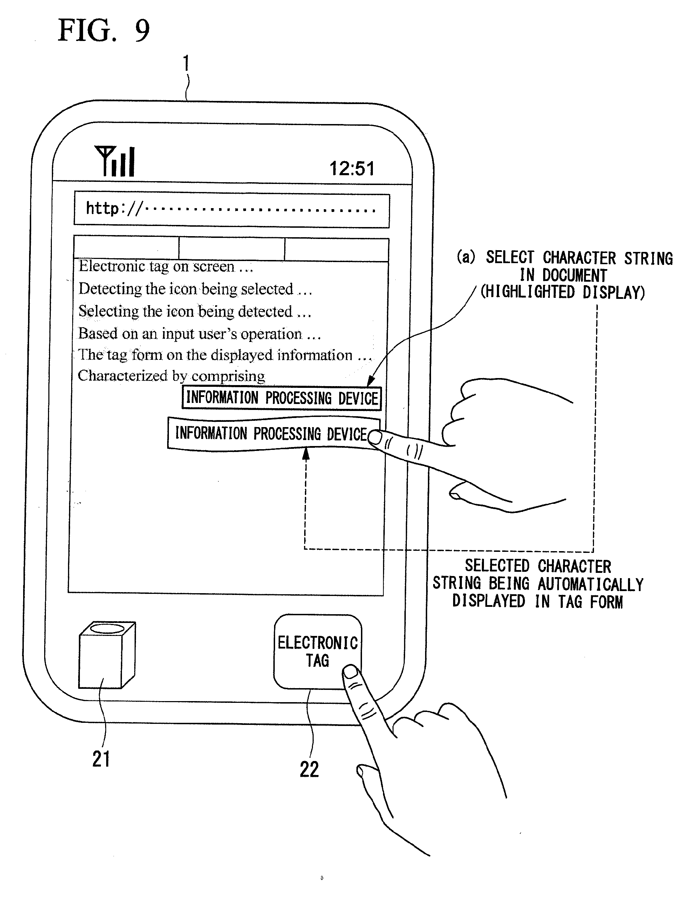

Next, an example of an operation shown in Fig. 9 will be described. Herein, documentary information is displayed in the display area on the touch panel 10 of the information processing device 1, wherein, as shown in Fig. 9(a), a character string representing a part of documentary information is selected by a user's finger and highlighted. In this condition, a user selects the electronic tag 22 with a user's finger so as to display a tag form, which is then subjected to a slide operation. Thus, the tag display part 153 moves the tag form to a desired position along with the movement of the touch position with a user's finger. Thereafter, upon detecting the release of the touch operation with a user's finger, the tag write part 155 reads the highlighted character string so as to output it to the tag display 153. The tag display 153 writes the read character string in the tag form. Owing to the above process, it is possible to automatically write a character string or a sentence, which a user selects in the documentary information displayed in the display area of the touch panel 10, in each tag form, thus further improving the user friendliness for the electronic tag 22.

Fig. 9 shows that a single character string of "information processing device" is highlighted in the documentary information; but this is not a restriction. When a plurality of character strings is discretely displayed and highlighted, the tag write part 155 generates write information by collectively combining a plurality of character strings which are highlighted. For example, the documentary information may include a sentence A and a sentence B both of which are highlighted. In this case, when a user moves a tag form to the display area of the documentary information with a user's finger, the tag write part 155 combines the sentence A and the sentence B so as to generate the write information configured of sentence A + sentence B, thus outputting it to the tag display 153. Thereafter, the tag display part 153 displays and writes the write information configured of sentence A + sentence B in a tag form.

When a plurality of texts is discretely displayed and highlighted in the documentary information, the tag write part 155 adopting a program to recognize sentences in documentary information may estimate the order of plural texts in the recognized sentences, thus combining them. Upon detecting that a plurality of tag forms is specified via a user's multi-touch gesture on the touch panel 10, the tag write part 155 may combine a plurality of write information, which is described in a plurality of tag forms, into a single tag form. In this case, it is possible to display a single tag form, which is displayed by combining a plurality of write information, while deleting other tag forms.

When a plurality of texts is discretely displayed and highlighted in the documentary information, the tag write part 155 may adopt various combining methods with respect to a plurality of texts. For example, it is possible to sort and combine a plurality of texts by interpreting the grammar of documentary information; it is possible to combine a plurality of texts by sorting their titles in a Japanese-kana syllabary order or an alphabetic order; it is possible to determine the order of combining a plurality of texts based on their numerical information; or it is possible to sort and combine a plurality of texts in an ascending order or a descending order. Alternatively, the information processing device 1 may be furnished with a function to ask each user about the order or the combining rules with respect to a plurality of texts.

Write information of tag forms is not necessarily limited to sentences included in documentary information; hence, it is possible to select and write other data such as moving pictures and still pictures in tag forms. When a plurality of moving pictures or still pictures is written into tag forms, it is possible to determine their display order based on data names, dates, and time data. In this case, it is possible to sequentially execute batch processing so as to produce processing results based on a plurality of procedures. Alternatively, it is possible to sequentially combine a plurality of procedures in a manner similar to pipeline processing such that processing results of a certain procedure are input to another procedure.

The tag write part 155 may extract and output a highlighted sentence of documentary information as additional write information with regard to a tag form in which desired write information was already recorded. Thus, the tag display 153 may write additional write information in the tag form. In this case, the tag display part 153 may add the additional write information to the tail of the write information already recorded in the tag form. The tag display 153 adopting a program to recognize an additional text and a text already recorded in a tag form may recognize the sentences of the texts so as to estimate the order of a plurality of texts. In this case, it is possible not to add an additional text to the tail of a text already recorded in a tag form but to insert an additional text at a desired position. With respect to still pictures or moving pictures serving as additional information, these pictures are basically added to the tail of the write information already recorded in a tag form. However, it is possible to determine the order of pictures based on data names, dates, and time data of pictures, wherein pictures are not added to the tail of the write information already recording in a tag form but inserted at desired positions. With respect to procedures and programs serving as additional write information, these procedures are basically added to the tail of the write information already recorded in a tag form. However, the information processing device 1 may be furnished with an option function to ask each user about the position of adding each procedure.

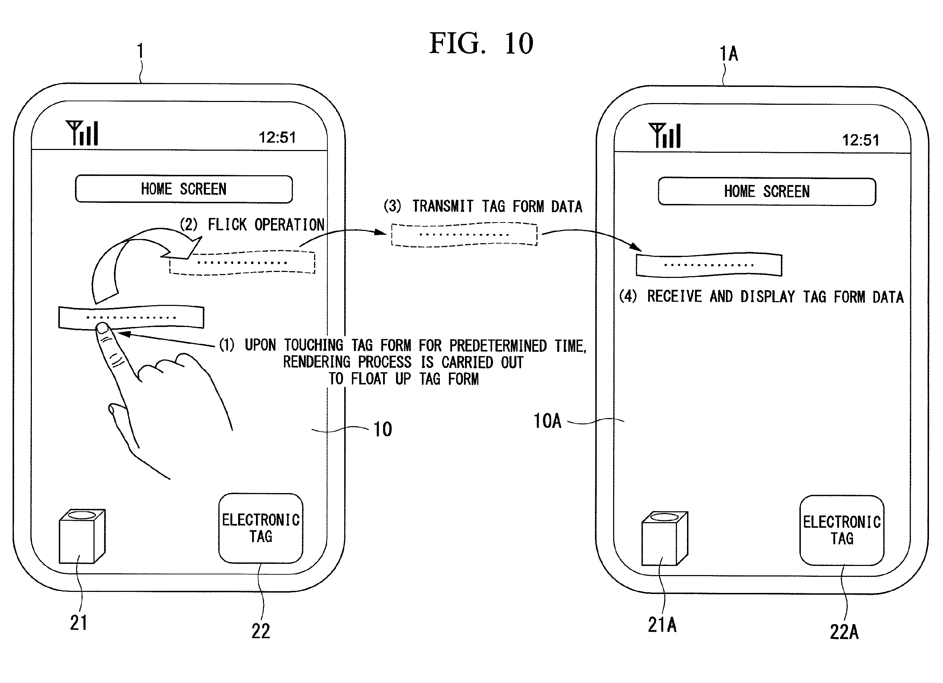

Next, an example of an operation shown in Fig. 10 will be described.

The information processing device 1 of the present embodiment is able to transmit write information recorded in a tag via a user's operation to another information processing device 1A. Fig. 10 shows a sequence of transmitting write information between the information processing device 1 of the present embodiment and another information processing device 1A. The information processing device 1A has the same configuration and function (i.e. the configuration and function shown in Fig. 2) as the information processing device 1, wherein icons representing a trash box 21A and an electronic tag 22A are displayed on a touch panel 10A. A process of transmitting and receiving write information of a tag form will be described in detail with reference to (1)-(4) in Fig. 10.
(1) A user of the information processing device 1 is touching a tag form displayed on the touch panel 10 with a user's finger for the predetermined time or more. The tag display part 153 carries out a rendering process to float up a tag form on the screen or a fluctuating rendering process to demonstrate a visual effect in which a tag form seems to be floated up.
(2) To transmit write information of a tag form to another information processing device 1A, a user of the information processing device 1 performs a flick operation while touching the tag form with a user's finger. The flick operation is an operation to rapidly move the touch position via a user's gesture to flick the touch panel 10 with a user's finger tip. Upon detecting a flock operation, the move operation detection part 158 instructs the communication connection detection part 157 to determine a communication connection.
(3) The communication connection detection part 157 acquires a communication condition from the communication part 12 so as to store "connection" or "non-connection", representing a communication condition between the information processing device 1 and another information processing device 1A, in the store part 16. When a communication condition representing "connection" is stored in the store part 16, the communication connection detection part 157 instructs the tag form data transmitter 159 to transmit data to another information processing device 1A. The tag form data transmitter 159 reads tag form data (i.e. a tag form and its write information), which the tag form manager 156 saves in the home screen display information data table, so as to transmit the tag form data to another information processing device 1A via the communication part 12.

The communication part 12 may implement a plurality of communication functions such as WiFi, Bluetooth (a trademark), infrared communication, and data communication with a base station of a cellular phone system. It is possible to determine which communication function, among a plurality of communication functions, should be used to transmit tag form data based on user setting in advance. Additionally, it is possible to determine which address information (e.g. an IP address, a telephone number, an identification, an ID, etc.) should be used to specify an information processing device, to which tag form data should be transmitted, based on user setting in advance. Thus, the tag form data transmitter 159 transmits tag form data to another information processing device 1A based on the communication function and the address information which are determined via the user setting in advance. In this connection, a flick operation in which a user flicks a tag form with a user's finger can be carried out in any direction on the touch panel 10. When a user selects a plurality of tag forms and performs a flick operation with a user's finger, it is possible to collectively transmit tag form data, regarding a plurality of tag forms, to another information processing device 1A.
(4) In another information processing device 1A which receives tag form data from the information processing device 1, the tag form data input part 160 retrieves tag form data via the communication part 12, and then the tag form manager 156 records tag form data in the home screen display information data table. Thus, when the screen control part 13 of another information processing device 1A displays a home screen on the touch panel 10A, the tag form manager 156 reads the received tag form data from the home screen display information data table so as to display the tag form and its write information in the home screen. According to a series of transmission/reception processes (1) to (4), it is possible to receive and transmit tag form data between the two information processing devices 1 and 1A.

In the information processing device 1, when a user carries out a move operation with a user's finger such that a tag form, which is displayed on the touch panel 10, is moved to and overlapped with the trash box 21, the tag form manager 156 deletes the tag form data. Specifically, when a user touches a tag form, which is displayed on the touch panel 10, with a user's finger and then moves the touch position, the tag display 153 moves the display position of the tag form along with the movement of the touch position with a user's finger. Thereafter, when the tag form manager 156 determines the display position of a tag form being overlapped with the display area of the trash box 21 and further detects the release of the touch operation with a user's finger, the tag form manager 156 instructs the tag display 153 to delete the tag form which is displayed on the touch panel 10. Additionally, the tag form manager 156 deletes the tag form data from the home screen display information data table. Alternatively, it is possible to determine a deletion candidate representing tag form data relating to a tag form which is displayed to overlap with the trash box on the touch panel 10; thereafter, it is possible to delete the tag form data in response to a deletion instruction which is issued separately.

The tag form manager 156 may delete a plurality of tag forms at all or determine all the tag forms as deletion candidates when a user concurrently selects a plurality of tag forms, which are displayed on the touch panel 10, with fingers in such a way that one tag form among those tag forms is moved and overlapped with the display area of the trash box 21 while the release of the touch operation on the tag form is detected. Additionally, the tag form manager 156 may determine a plurality of tag forms as one group when it is detected that an area encompassing a plurality of tag forms, which are displayed on the touch panel 10, is specified via a multi-touch gesture with user's fingers while a user makes a gesture to reduce the area with fingers. Thereafter, the tag form manager 156 may delete a plurality of tag forms at all or determine all the tag forms as deletion candidates when it detects that one tag form among a plurality of tag forms is moved and overlapped with the display area of the trash box 21.

The aforementioned examples of operations are illustrative and not restrictive; hence, it is possible to implement other examples of operations in the information processing device 1. For example, the tag form manager 156 may determine the order of tag forms when it detects that a plurality of tag forms is sequentially displayed to overlap with each other on the touch panel 10. For example, the tag form manager 156 detects that a plurality of tag forms, which store procedures such as programs, is displayed to overlap with each other on the touch panel 10. In this case, upon detecting that the execution information of a program is written in to the uppermost tag form, the tag form manager 156 instructs the controller 11 to sequentially execute programs in the order from the program recorded in the lowermost tag form to the programs recorded in the upper tag forms. Thus, it is possible to execute programs using tag forms, and it is possible to instruct the order to execute programs.

According to the present embodiment described above, it is possible to write user's preferred information into a tag form (i.e. to correlate desired data to a tag form), thus displaying the information on the touch panel 10. For this reason, it is possible for each user to operate the information processing device 1 by intuition in recording desired information and executing desired processing with ease; hence, it is possible to improve the user friendliness for electronic tags. According to the present embodiment, it is possible to automatically read and write the display information in a tag form when a user moves the tag form to a desired position and overlap the tag form with a desired display area on the touch panel. Therefore, it is possible for each user to write desired data in a tag form via the same operation irrespective of types and structures of data. In other words, it is possible for each user to easily store desired data by way of a folder-like function of a tag form.

The information processing device 1 according to the present embodiment includes a computer system in which the functionality of the present embodiment (i.e. the function of the electronic tag application processing part 15) is recorded as programs in computer-readable recording media. By reading and executing programs, it is possible to implement the processing of the present embodiment. In this connection, computer-readable recording media refer to magnetic disks, magneto-optical disks, CD-ROM, DVD-ROM, and semiconductor memory. Additionally, it is possible to distribute computer programs to computers via communication lines such that computers can execute computer programs distributed thereto. The foregoing programs may represent part of the functionality of the present embodiment. Moreover, they may be differential files (or differential programs) which are combined with pre-installed programs of computer systems so as to achieve the functionality of the present embodiment.

### INDUSTRIAL APPLICABILITY

The present invention aims to improve the user friendliness for electronic tags in information processing devices having touch panels and implements various functions in which desired information is attached to tag forms and transferred to other information processing devices; hence, the present invention is applicable to cell phones, smart phones, tablet PCs, etc.

### REFERENCE SIGNS LIST

- 1: information processing device
- 11: controller
- 12: communication part
- 13: screen control part
- 14: touch sensor control part
- 15: electronic tag application processing part
- 16: store part
- 151: icon display
- 152: icon selection detection part
- 153: tag display
- 154: display state determination part
- 155: tag write part
- 156: tag form manager
- 157: communication connection detection part
- 158: move operation detection part
- 159: tag form data transmitter
- 160: tag form data input part

## Claims

1. An information processing device having a touch panel, comprising:
an icon display which displays an electronic tag icon of an electronic tag application on a screen;
an icon selection detection part which detects a user's operation to select the electronic tag icon;
a tag display which displays a tag form on the screen upon detecting the user's operation to select the electronic tag icon;
a display state determination part which determines as to whether or not the tag form is displayed to overlap with display information, which is displayed in a predetermined area on the screen, via a user's operation; and
a tag write part which writes and displays write information, which is extracted from the display information, in the tag form when the display state determination part determines that the tag form is displayed to overlap with the display information.

2. The information processing device according to claim 1, wherein the display information includes a character string, and wherein the tag write part displays a part of the character string, which is selected by a user, or entirety of the character string in the tag form as the write information.

3. The information processing device according to claim 1, wherein, when a user selects a plurality of character strings included in the display information, the tag write part combines the plurality of character strings to generate the write information so as to display the write information in the tag form.

4. The information processing device according to claim 1, further comprising a tag form manager which manages the tag form in connection with the screen, wherein the tag form manager moves and displays the tag form and the write information in a desired screen.

5. The information processing device according to claim 1, further comprising:
a move operation detection part which detects a user's move operation on the tag form; and
a tag form data transmitter which transmits tag form data, representing the tag form and the write information subjected to the move operation, to other information processing device.

6. The information processing device, further comprising a tag form data input part which receives the tag form data from the other information processing device so as to display the tag form data on the screen.

7. A method for processing write information of an electronic tag adapted to an information processing device having a touch panel, comprising:
displaying an electronic tag icon of an electronic tag application on a screen;
detecting a user's operation to select the electronic tag icon;
displaying a tag form on the screen;
determining as to whether or not the tag form is displayed to overlap with display information, which is displayed in a predetermined area of the screen, via a user's operation;
extracting write information from the display information with which the tag form is displayed to overlap; and
writing and displaying the write information in the tag form.

8. A program which applies an electronic tag to an information processing device having a touch panel so as to execute processing of write information in the electronic tag, comprising:
displaying an electronic tag icon of an electronic tag application on a screen;
detecting a user's operation to select the electronic tag icon;
displaying a tag form on the screen;
determining as to whether or not the tag form is displayed to overlap with display information, which is displayed in a predetermined area of the screen, via a user's operation;
extracting write information from the display information with which the tag form is displayed to overlap; and
writing and displaying the write information in the tag form.
